# FASCICULE DE BREVET EUROPEEN

(11) **EP 3 239 049 B1**
(45) Date de publication et mention de la délivrance du brevet: **07.11.2018**
(21) Numéro de dépôt: 17160896.1
(22) Date de dépôt: 14.03.2017
(51) Int. Cl.: B64C 3/56, B64C 27/22, B64C 39/02

(54) **DRONE COMPORTANT AU MOINS TROIS ROTORS DE SUSTENTATION ET DE PROPULSION**
DROHNE, DIE MINDESTENS DREI ROTOREN ALS HUB- UND FLUGANTRIEBSSYSTEM UMFASST
A DRONE HAVING AT LEAST THREE LIFT AND PROPULSION ROTORS

(30) Priorité: 26.04.2016 FR 1600688
(43) Date de publication de la demande: 01.11.2017
(73) Titulaire: Airbus Helicopters, 13725 Marignane Cedex (FR)
(72) Inventeur: THOMASSEY, Lionel, 13270 FOS SUR MER (FR)
(74) Mandataire: GPI & Associés

(56) Documents cités:
- WO-A1-2015/124556
- WO-A2-2016/003530
- CN-A- 105 129 081
- US-A1- 2013 206 921

## Description

La présente invention se rapporte au domaine des aéronefs dépourvus de tout pilote ou d'équipage à bord. De tels aéronefs sont couramment désignés par le terme de drone ou encore par l'acronyme anglais UAV désignant en langue anglaise l'expression "Unmanned Aerial Vehicle".

Plus particulièrement, l'invention concerne un drone comportant au moins trois rotors de sustentation et de propulsion entraînés en rotation par au moins trois moteurs électriques indépendants et pilotés par un système de commande centralisé.

En outre de tels drones peuvent être soit autonomes et comportent alors des moyens de navigation et de pilotage automatiques, soit commandés à distance et comportent dans ce cas au moins des moyens de réception de signaux de commande utilisant un protocole de communication sans fil tel par exemple des radiofréquences. De tels signaux de commande permettent alors d'effectuer un contrôle à distance du système de commande des au moins trois rotors équipant ce type de drone.

Ainsi pour réaliser leur propulsion et leur sustentation, de tels drones possèdent un ensemble de sustentation formé par ces au moins trois rotors. Si un tel ensemble de sustentation permet d'effectuer des phases de vol stationnaire, il consomme cependant beaucoup d'énergie électrique surtout lors des phases de vol stationnaire mais aussi en vol de croisière lors de déplacements permettant aux drones d'atteindre un lieu éloigné.

De tels drones à au moins trois rotors de sustentation et de propulsion ne possèdent donc pas une autonomie élevée ou une endurance importante et/ou ne peuvent effectuer des missions sur de longues distances.

Ainsi, le document WO 2015/124556 A1 décrit un drone à quatre rotors juxtaposés les uns à côté des autres et solidarisés à une structure porteuse. Un tel drone dispose également de deux demi-ailes comportant chacune une portion mobile par rapport à la structure porteuse. En outre, de telles portions mobiles sont aptes à se replier entre une position déployée et une position repliée.

Cependant dans ce cas, l'axe de rotation permettant un mouvement de rotation entre les deux portions mobiles et la structure porteuse, est orienté suivant une direction perpendiculaire au plan défini par la structure porteuse du drone. Par suite, lorsque les portions mobiles des demi-ailes sont agencées en position repliée, elles viennent se rabattre contre le plan défini par la structure porteuse. Chaque demi-aile peut venir au contact avec le sol au niveau de sa tranche longitudinale comprenant un bord de fuite et/ou d'attaque du profil aérodynamique formant les deux demi-ailes.

Un tel agencement n'est alors adapté pour permettre aux deux demi-ailes de former un train d'atterrissage du drone. En effet, le contact répété entre le sol et la tranche des ailes peut les endommager et dégrader les performances de vol d'un tel drone muni de deux demi-ailes.

De plus, la forme de la structure porteuse du drone décrite dans le document WO 2015/124556 A1 est sensiblement carrée. Un tel drone ne comporte donc pas une forme allongée selon une direction longitudinale X avec des demi-ailes aptes à se replier suivant des axes parallèles à cette direction longitudinale X.

Le document US 2013/0206921 A1 présente quant à lui un drone muni de deux moteurs comprenant chacun deux rotors contrarotatifs positionnés symétriquement de part et d'autre d'un plan médian. Un tel drone comporte également deux demi-ailes aptes à se replier pour former un support au drone permettant d'orienter les moteurs avec une inclinaison suffisante pour réaliser une poussée partiellement verticale et ainsi permettre au drone de décoller verticalement.

Cependant dans ce cas, si les demi-ailes comportent bien chacune une portion mobile, l'axe de rotation de la liaison pivot n'est pas orienté parallèlement à la direction longitudinale de ce drone. En effet, l'axe de rotation est incliné vers l'avant et vers le sol lorsque la direction longitudinale du drone est orientée horizontalement. Un tel agencement permet alors de faire reposer le drone sur sa queue avec un angle δ_{T} très inférieur à 90°.

Le document WO 2016/003530 A2 décrit un drone à décollage/atterrissage vertical comportant des ailes repliables. Un tel drone ne comporte cependant qu'un seul rotor central dont l'axe de rotation est parallèle à la direction longitudinale du drone. Comme pour le drone décrit dans le document WO 2015/124556 A1 c'est alors le bord de fuite du profil aérodynamique de chaque demi-aile qui peut venir en contact avec le sol et en aucun cas servir de train d'atterrissage.

Le document CN 105 129 081 A décrit quant à lui un drone à quatre rotors juxtaposés comportant deux demi-ailes non repliables.

La présente invention a alors pour objet de proposer un drone comportant au moins trois rotors de sustentation et de propulsion permettant de s'affranchir des limitations mentionnées ci-dessus. Un tel drone conforme à l'invention permet ainsi d'atteindre des lieux éloignés d'une base de départ situés à plusieurs dizaines de kilomètres, voire plusieurs centaines de kilomètres, de la base de départ puis, le cas échéant, de revenir à cette base de départ. Cette augmentation de l'autonomie est notamment obtenue grâce à une diminution de la consommation d'énergie électrique des au moins trois rotors lors d'une phase de vol en avancement du drone.

L'invention concerne donc un drone selon la revendication 1.

Les portions mobiles des deux demi-ailes du drone sont agencées selon une liaison de type pivot par rapport à la structure porteuse. Ces portions mobiles des demi-ailes permettent alors de servir alternativement de train d'atterrissage au niveau de leur extrémité libre ou de voilure fixe pour augmenter ponctuellement en vol la portance du drone. De cette manière lorsque les demi-ailes sont déployées, on réduit la consommation d'énergie électrique des moteurs électriques entraînant en rotation les au moins trois rotors de sustentation et de propulsion. Ces deux demi-ailes sont par ailleurs bien entendu agencées symétriquement de part et d'autre de la structure porteuse du drone, leurs envergures respectives s'étendant sensiblement perpendiculairement par rapport à la direction longitudinale X du drone.

Les axes de rotation des au moins trois moteurs électriques sont par ailleurs agencés perpendiculairement par rapport à la direction longitudinale X et permettent donc de générer une poussée verticale alors que la structure porteuse reste sensiblement horizontale.

Les deux premiers actionneurs électriques permettent ainsi de déplacer la portion mobile de chaque demi-aile dans au moins une première direction en rotation entre la position repliée et la position déployée ou réciproquement entre la position déployée et la position repliée. Le retour en position initiale correspondant à la position repliée ou à la position déployée peut quant à lui être réalisé soit également par les deux premiers actionneurs électriques opérant selon une seconde direction opposée à la première direction en rotation, soit par des moyens de rappel élastique tels au moins un ressort sollicité en traction, en compression ou en torsion.

En outre, le système de commande embarqué sur le drone permet de commander simultanément l'alimentation en énergie électrique des au moins trois moteurs électriques entraînant en rotation respectivement les au moins trois rotors et les deux premiers actionneurs électriques permettant de déplacer les portions mobiles des deux demi-ailes.

Selon une première variante, les premiers actionneurs électriques peuvent par exemple être formés par des vérins permettant d'effectuer un déplacement linéaire entre un point de chaque portion mobile et un point de la structure porteuse du drone. Ces deux points sont par ailleurs distants par rapport au premier axe de rotation R pour permettre le déplacement en rotation de chaque portion mobile par rapport à la structure porteuse du drone.

Selon une seconde variante, les premiers actionneurs électriques peuvent par exemple être formés par des moteurs réducteurs intégrant un encodeur capable notamment de déterminer une position angulaire de la rotation de la portion mobile par rapport à la structure porteuse du drone. Ce type de premier actionneur selon la seconde variante est alors avantageusement agencé au niveau du premier axe de rotation R.

Selon l'invention, la au moins une portion mobile est apte à se déplacer par rapport à la structure porteuse du drone selon un second degré de liberté en rotation suivant un second axe de rotation R' sensiblement parallèle à une direction transversale Y du drone lorsque la portion mobile des deux demi-ailes est agencée en position déployée.

En d'autres termes, la portion mobile de chaque demi-aile peut pivoter autour de deux axes de rotation R et R' par exemple perpendiculaires entre eux. Chaque portion mobile est ainsi agencée selon une liaison de type cardan ou rotule à doigt avec la structure porteuse du drone.

De plus, chaque portion mobile est apte à pivoter indépendamment l'une par rapport à l'autre autour du second axe de rotation R'. Par suite, l'angle de rotation correspondant à la position angulaire d'une portion mobile gauche de la demi-aile gauche du drone par rapport à la structure porteuse peut être différent de l'angle de rotation correspondant à la position angulaire d'une portion mobile droite de la demi-aile droite du drone par rapport à la structure porteuse.

Ainsi, lorsque l'angle de rotation correspondant à la position angulaire d'une portion mobile d'une demi-aile gauche par rapport à la structure porteuse est modifié dans un sens opposé à l'angle de rotation correspondant à la position angulaire d'une portion mobile d'une demi-aile droite par rapport à la structure porteuse, le système de commande permet de piloter le drone en roulis.

En revanche, lorsque l'angle de rotation correspondant à la position angulaire d'une portion mobile d'une demi-aile gauche par rapport à la structure porteuse est modifié simultanément en restant égal à l'angle de rotation correspondant à la position angulaire d'une portion mobile d'une demi-aile droite par rapport à la structure porteuse, le système de commande permet de piloter le drone en tangage et assure les éventuels changement d'altitude.

En pratique, chacune des au moins une portion mobile comporte:
- un longeron présentant une extrémité proximale au niveau de laquelle sont agencées au moins deux premiers paliers pour former une liaison de type pivot suivant le premier axe de rotation R avec la structure porteuse du drone, une extrémité distale opposée à l'extrémité proximale,
- au moins un élément profilé aérodynamiquement recouvrant le longeron,
- au moins deux seconds paliers pour former une liaison de type pivot suivant le second axe de rotation R' entre le longeron et l'élément profilé aérodynamiquement.

De cette manière, les au moins deux premiers paliers permettent de réaliser le premier degré de liberté en rotation suivant le premier axe de rotation R entre le longeron et la structure porteuse du drone.

De même, les au moins deux seconds paliers permettent de former le second degré de liberté en rotation suivant le second axe de rotation R' entre le longeron et l'élément profilé. Ces au moins deux seconds paliers sont avantageusement espacés l'un de l'autre pour limiter le porte à faux de l'élément profilé par rapport aux deux premiers paliers. Un desdits seconds paliers est alors agencé à proximité de l'extrémité proximale du longeron tandis que l'autre desdits seconds paliers est agencé à proximité de l'extrémité distale du longeron. En outre, le second axe de rotation R' est sensiblement agencé selon l'envergure du longeron.

Ces premiers et seconds paliers peuvent par exemple être formés par des roulements à billes, à aiguilles ou à rouleaux, par des paliers lisses en bronze dits auto-lubrifiés ou encore par des paliers lisses formés dans un matériau polymère à faible coefficient de frottement tel que du polytétrafluoroéthylène, notamment.

En outre, un tel élément profilé aérodynamiquement comprend une structure interne solidarisée avec les au moins deux seconds paliers et un revêtement externe comportant une face d'extrados et une face d'intrados. La structure interne et le revêtement externe de l'élément profilé peuvent alors être formés par deux structures disjointes solidarisées entre elles en liaison de type encastrement ou encore constituer une pièce monolithique formée dans un même matériau.

Par ailleurs, le longeron peut être de forme tubulaire.

Ainsi, le longeron est avantageusement creux sur toute sa longueur entre son extrémité proximale et son extrémité distale. Un tel longeron creux peut alors permettre le passage d'une connexion électrique ou de tout organe de transmission permettant d'entraîner en rotation l'élément profilé par rapport au longeron suivant le second axe de rotation R', sensiblement confondu avec l'envergure du longeron.

En effet selon un premier exemple, chacune des portions mobiles peut comporter un second actionneur électrique agencé au niveau de l'extrémité distale du longeron pour piloter une orientation angulaire de l'élément profilé par rapport au longeron suivant le second axe de rotation R' et le système de commande peut être apte à délivrer une alimentation en énergie électrique de deux seconds actionneurs électriques.

Dans ce cas, une connexion électrique passe dans le longeron tubulaire et permet d'alimenter en énergie électrique chaque second actionneur électrique pour commander la rotation de chaque élément profilé par rapport au longeron correspondant.

Un tel second actionneur peut être formé par un moteur réducteur et peut alors par exemple entraîner en rotation un pignon denté solidaire de l'axe motorisé du moteur réducteur, ce pignon denté coopérant avec une roue dentée intérieure solidaire de l'élément profilé pour entraîner en rotation l'élément profilé par rapport au longeron. Selon une alternative, le moteur réducteur peut également entraîner en rotation une biellette solidarisée d'une part avec l'élément profilé et d'autre part avec un axe motorisé du moteur réducteur.

Selon un second exemple, la structure porteuse peut comporter deux seconds actionneurs électriques, chaque second actionneur électrique étant agencé respectivement à proximité d'une extrémité proximale d'un longeron pour piloter l'orientation angulaire respective d'un élément profilé par rapport au longeron correspondant suivant le second axe de rotation R'. Le système de commande peut être ainsi apte à délivrer une alimentation en énergie électrique des deux seconds actionneurs électriques.

Par conséquent, les deux seconds actionneurs électriques ne sont pas agencés dans la portion mobile de chaque demi-aile et la forme tubulaire du longeron permet le libre passage, voire le guidage en rotation, d'un organe de transmission permettant d'entraîner en rotation l'élément profilé par rapport au longeron suivant le second axe de rotation R'.

Par suite selon une première réalisation de l'invention conforme au second exemple chacune des portions mobiles peut comporter :
- un arbre de transmission guidé en rotation à l'intérieur du longeron, l'arbre de transmission comportant une première extrémité entraînée en rotation par l'un des deux seconds actionneurs électriques et une seconde extrémité solidarisée avec l'élément profilé pour transmettre un mouvement de rotation de l'arbre de transmission à l'élément profilé,
- une boite de transfert comportant trois pignons coniques pour transmettre un mouvement de rotation généré par l'un des au moins deux seconds actionneurs électriques à l'arbre de transmission.

Dans ce cas, chaque arbre de transmission est alors guidé en rotation par exemple au moyen de roulements à billes respectivement avec un alésage de chaque longeron tubulaire. Chaque arbre de transmission est formé par un axe rigide apte à transmettre un couple moteur pour générer le mouvement de rotation de chaque élément profilé.

Par ailleurs, chaque boite de transfert est agencée au niveau du premier axe de rotation R de chacune des demi-ailes et permet de transmettre le mouvement de rotation de l'un des au moins deux seconds actionneurs électriques à l'un des arbres de transmission quelque soit la position angulaire autour du premier axe de rotation R du longeron par rapport à la structure porteuse.

Selon une seconde réalisation de l'invention conforme au second exemple, le drone peut comporter au moins deux organes de transmission flexibles, chaque organe de transmission flexible comportant une première extrémité entraînée en rotation par l'un des au moins deux seconds actionneurs électriques et une seconde extrémité solidarisée avec l'un des éléments profilés pour transmettre un mouvement de rotation de l'organe de transmission flexible à l'élément profilé.

Dans cet autre cas, les au moins deux organes de transmission flexibles sont également guidés en rotation par exemple au moyen de roulements à billes respectivement avec un alésage de chaque longeron tubulaire. De tels organes de transmission flexibles peuvent par exemple être formés par une gaine souple dans laquelle une lame est guidée par deux rangées de billes libres de tourner à l'intérieur de la gaine.

Une telle seconde réalisation de l'invention est alors avantageuse par rapport à la première réalisation de l'invention car elle ne nécessite aucune boite de transfert et a donc une masse inférieure.

Par ailleurs, chacune des portions mobiles peut comporter en pratique un système d'absorption pour absorber au moins partiellement l'énergie cinétique du drone lors de son atterrissage.

Un tel système d'absorption peut par exemple comprendre un vérin hydraulique ou pneumatique dont une première extrémité de tige vient en contact avec le sol lors d'un atterrissage du drone tandis qu'un cylindre est solidarisé avec la portion mobile de chaque demi-aile. Une deuxième extrémité de tige comporte alors un piston permettant de déplacer un fluide à l'intérieur du cylindre, le fluide pouvant passer au travers d'un orifice ménagé dans le piston.

Selon une réalisation particulière de l'invention, les au moins trois rotors peuvent être formés au moins par un rotor avant gauche, un rotor avant droit, un rotor arrière gauche et un rotor arrière droit par rapport au sens d'avancement longitudinal du drone, la structure porteuse comportant une forme allongée suivant la direction longitudinale X, un entraxe longitudinal L séparant les axes de rotation des rotors avant et les axes de rotation des rotors arrière étant supérieur à un entraxe transversal T séparant les axes de rotation des rotors gauches et les axes de rotation des rotors droits. L'aile peut quant à elle être implantée sur la structure porteuse dans une zone médiane de la structure porteuse suivant la direction longitudinale X.

Un tel agencement de la structure porteuse permet alors de positionner les demi-ailes dans la zone médiane du drone suivant la direction longitudinale X.

De plus, les rotors peuvent être de même diamètre ød et l'entraxe longitudinal L séparant les axes de rotation des rotors avant et les axes de rotation des rotors arrière peut être supérieur à la somme d'un diamètre ød des rotors et d'une corde C de la demi-aile mesurée à proximité d'une zone de liaison de la demi-aile avec la structure porteuse.

De cette manière, le flux d'air généré par chacun des rotors n'impacte pas les deux demi-ailes en position déployée et la corde de chaque demi-aile peut être relativement importante pour conférer une portance maximale.

Avantageusement, chacune des au moins une portion mobile peut comporter en outre au moins un rotor de propulsion entraîné en rotation par au moins un moteur électrique de propulsion et le système de commande peut être apte à délivrer une alimentation en énergie électrique du au moins un moteur électrique de propulsion.

En d'autres termes, les demi-ailes peuvent comporter des rotors de propulsion supplémentaires permettant notamment au drone d'atteindre une vitesse de déplacement en palier plus importante qu'avec seulement ses au moins trois rotors de sustentation et de propulsion.

Par ailleurs, un vol à vitesse de croisière constante peut être effectué avec une assiette horizontale du drone et non plus inclinée comme cela est le cas avec seulement les au moins trois rotors de sustentation et de propulsion. Les axes de rotation de ces rotors de propulsion sont en effet dans ce cas orientés sensiblement parallèlement à la direction longitudinale X du drone tandis que les axes de rotation des au moins trois rotors de sustentation et de propulsion sont orientés sensiblement suivant une direction en élévation Z perpendiculaire par rapport à la direction longitudinale X du drone.

L'invention et ses avantages apparaîtront avec plus de détails dans le cadre de la description qui suit avec des exemples donnés à titre illustratif en référence aux figures annexées qui représentent :
- la figure 1, une vue en perspective d'un drone conforme à l'invention,
- la figure 2, une vue de dessus d'un drone conforme à l'invention,
- la figure 3, une première vue de face d'un drone conforme à l'invention,
- la figure 4, une vue de face partielle d'un drone conforme à l'invention, et
- les figures 5 à 12, des vues en coupe partielle selon différentes variantes de portions mobiles de demi-ailes de drone, conformément à l'invention.

Les éléments présents dans plusieurs figures distinctes peuvent être affectés d'une seule et même référence.

Comme déjà évoqué, l'invention se rapporte à un drone 1 muni d'au moins trois rotors de propulsion et de sustentation.

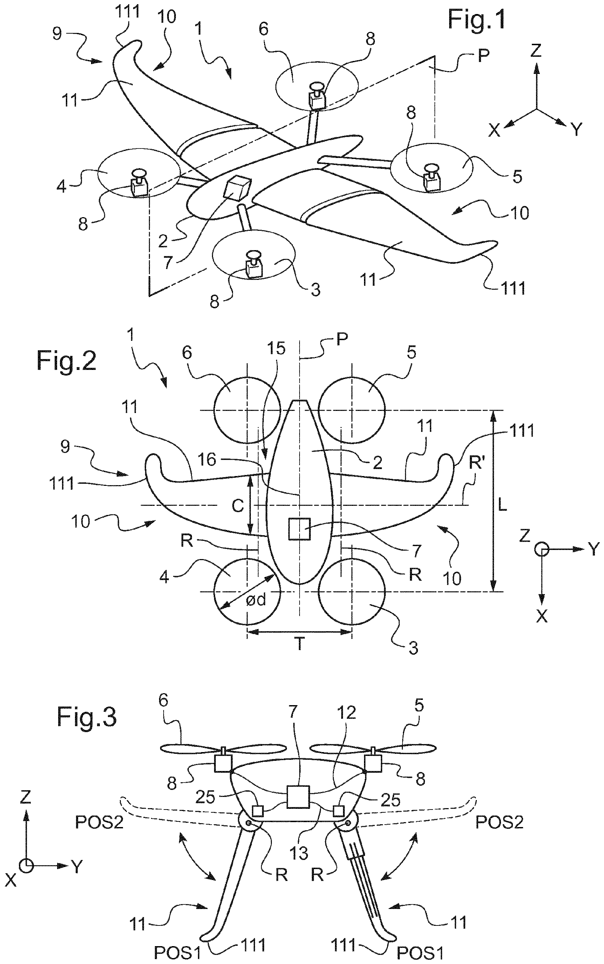

On note que trois directions X, Y et Z orthogonales les unes par rapport aux autres sont représentées sur les figures 1 à 3.

La direction X est dite longitudinale dans la mesure où elle s'étend de l'arrière vers l'avant d'une structure porteuse 2 du drone 1 comportant une forme allongée suivant cette direction longitudinale X.

Une autre direction Y est dite transversale puisqu'elle s'étend de la zone droite à la zone gauche de la structure porteuse 2 du drone 1.

Enfin, une troisième direction Z est dite d'élévation et correspond aux dimensions en hauteur du drone 1.

A titre d'exemple non limitatif et à des fins de simplification de la description détaillée de l'invention, le drone 1 peut comporter, tel que représenté à la figure 1,quatre rotors 3-6 agencés autour de la structure porteuse 2. Ces quatre rotors sont alors constitués par un rotor avant gauche 3, un rotor avant droit 4, un rotor arrière gauche 5 et un rotor arrière droit 6. Chacun de ces rotors 3-6 est entraîné en rotation par des moteurs électriques 8 agencés coaxialement respectivement sur un axe de rotation de chaque rotor 3-6.

En outre, chaque moteur électrique 8 est alimenté en énergie électrique par un système de commande 7 permettant de contrôler le drone 1 à distance ou de le piloter automatiquement de manière autonome pour effectuer une mission prédéterminée.

Par ailleurs, un tel drone 1 comporte également une aile 9 munie de deux demi-ailes 10 symétriques par rapport à un plan de symétrie antéropostérieur P parallèle au plan défini par les axes X et Z. Chaque demi-aile 10 comprend une portion mobile 11 apte à pivoter par rapport à la structure porteuse 2. De telles demi-ailes 10 permettent alors d'augmenter la portance du drone 1 en vol et ainsi de limiter la consommation en énergie électrique des moteurs électriques 8 pour maintenir le drone 1 à une altitude prédéterminée.

Les portions mobiles 11 s'étendent ainsi respectivement chacune transversalement entre la structure porteuse 2 et une extrémité libre 111 distincte de la tranche de chaque demi-aile 10.

Telle que représentée à la figure 2, la structure porteuse 2 du drone 1 comporte une forme allongée suivant la direction longitudinale X. Ainsi, un entraxe longitudinal L entre les axes de rotation des rotors avant 3, 4 et les axes de rotation des rotors arrière 5, 6 peut être supérieur à un entraxe transversal T entre les axes de rotation des rotors gauches 3, 5 et les axes de rotation des rotors droits 4, 6.

En outre, un telle structure porteuse 2 comporte une zone médiane 16 suivant la direction longitudinale X de laquelle émerge latéralement les deux demi-ailes 10 suivant une direction sensiblement parallèle à la direction transversale Y.

Par ailleurs, les quatre rotors 3-6 peuvent avantageusement avoir un même diamètre ød.

De plus, l'entraxe longitudinal L est supérieur à la somme d'un diamètre ød d'un rotor 3-6 et d'une corde C des demi-ailes 10 mesurée à proximité d'une zone de liaison 15 avec la structure porteuse 2.

De cette manière, le flux d'air généré sensiblement verticalement vers le bas par les quatre rotors 3-6 n'est pas perturbé par les demi-ailes 10.

Selon l'invention, la portion mobile 11 de chaque demi-aile 10 est alors libre de pivoter suivant un premier axe de rotation R et un second axe de rotation R' par rapport à la structure porteuse 2.

Le premier axe de rotation R est agencé sensiblement parallèlement à la direction longitudinale X du drone 1 tandis que le second axe de rotation R' est agencé sensiblement parallèlement à la direction transversale Y du drone 1.

Telle que représentée à la figure 3, chaque portion mobile 11 peut alors pivoter autour du premier axe de rotation R entre une position repliée POS1 dans laquelle chaque extrémité libre 111 d'une portion mobile 11 sert de train d'atterrissage au drone 1 et une position déployée POS2 dans laquelle chaque portion mobile 11 augmente la portance du drone 1 en vol.

En outre, un tel agencement permet de ne pas mettre en contact le sol avec le profil aérodynamique des deux demi-ailes 10 et en particulier avec leurs bords d'attaque et/ou fuite.

Le pivotement de chaque portion mobile 11 autour du premier axe de rotation R est alors obtenu au moyen d'un premier actionneur électrique 25 alimenté en énergie électrique par le système de commande 7 via des connexions filaires 13 conductrices de l'électricité. De même, les moteurs électriques 8 des rotors 3-6 sont alimentés en énergie électrique par le système de commande 7 via des connexions filaires 12 conductrices de l'électricité.

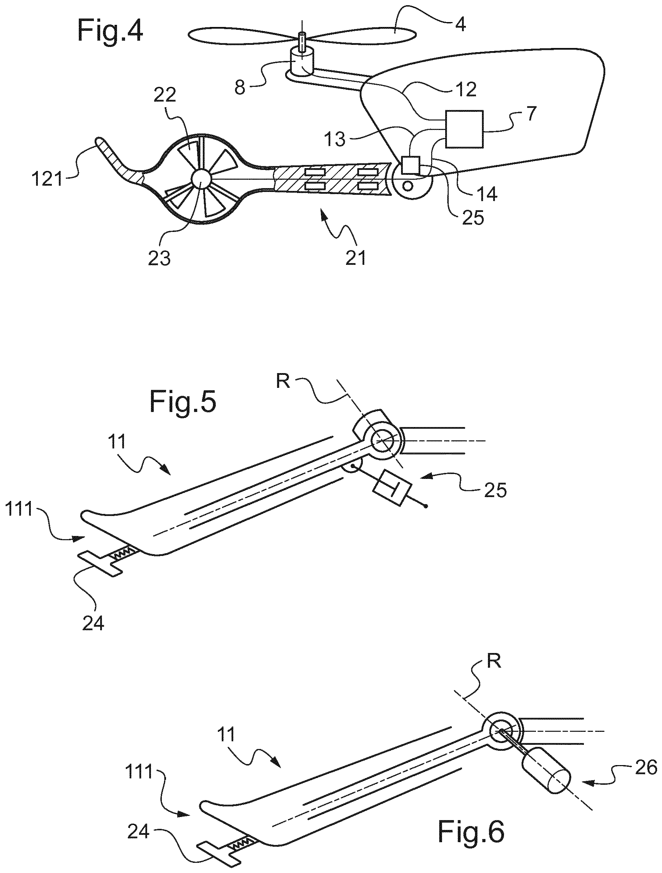

Tel que représenté à la figure 4, chaque portion mobile 21 peut être équipée d'un rotor de propulsion 22 entraîné en rotation par un moteur électrique de propulsion 23 associé et alimenté en énergie électrique par le système de commande 7 via des connexions filaires 14 conductrices de l'électricité.

Un tel rotor de propulsion 22 peut avantageusement être de type "EDF" selon l'acronyme anglais désignant l'expression "Electrical Ducted Fan" correspondant à une hélice ou une turbine carénée actionnée par le moteur électrique de propulsion 23.

Ces rotors de propulsion 22 permettent alors d'augmenter la vitesse de déplacement du drone 1 suivant sa direction longitudinale X en maintenant la vitesse de rotation des rotors 3-6 à un régime de rotation minimal voire même en coupant l'alimentation électrique des moteurs électriques 8 des rotors 3-6.

Par ailleurs en appliquant une poussée différentielle entre les deux rotors de propulsion 22, on peut, dans une certaine mesure, générer une commande suivant une trajectoire en lacet du drone 1.

En outre, chaque rotor de propulsion 22 est agencé à proximité de chacune des extrémités libres 121 des deux portions mobiles 21.

Tel que représenté à la figure 5 selon une première variante, le premier actionneur électrique 25 peut être formé par un vérin dont l'une de ses extrémités est solidarisée avec la structure porteuse 2 et l'autre extrémité est solidarisée avec la portion mobile 11 de la demi-aile 10.

A tout le moins, ces extrémités du vérin sont éloignées du premier axe de rotation R pour transformer le mouvement de translation du vérin en un mouvement de rotation de la portion mobile 11 autour du premier axe de rotation R.

Tel que représenté à la figure 6 selon une seconde variante, le premier actionneur électrique 26 peut être formé par un moteur réducteur agencé sur le premier axe de rotation R.

Par ailleurs tel que représenté aux figures 5 à 7, un système d'absorption 24 peut équiper l'extrémité libre 111, 131 de la portion mobile 11, 31 pour absorber tout ou partie de l'énergie cinétique du drone 1 lors de son atterrissage sur le sol ou sur une plateforme. Un tel système d'absorption 24 comporte ainsi un organe mobile en translation et des moyens hydrauliques ou pneumatiques tels des vérins.

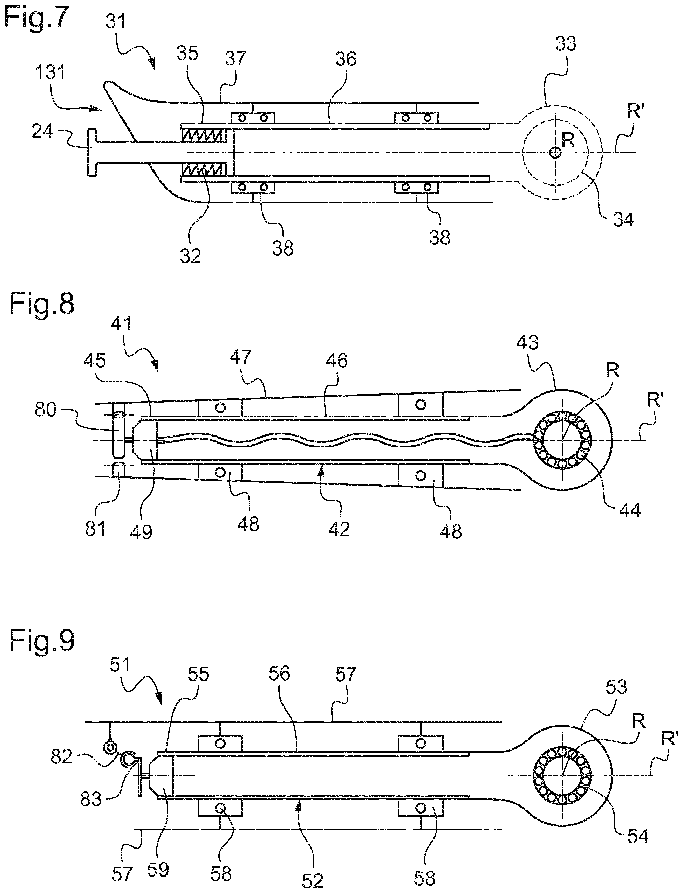

Telle qu'illustrée à la figure 7, la portion mobile 31 comporte un longeron 36 muni de deux premiers paliers 34 au niveau d'une extrémité proximale 33 du longeron 36. Ces deux premiers paliers 34 permettent alors de former le degré de liberté en rotation de la portion mobile 31 par rapport à la structure porteuse 2 autour du premier axe de rotation R.

Un tel longeron 36 comporte également une extrémité distale 35 opposée à l'extrémité proximale 33. De plus, ce longeron 36 peut être de forme tubulaire. Par ailleurs, le système d'absorption 24 est ici représenté comme comportant un ressort 32 coopérant avec un alésage ménagé à l'intérieur de l'extrémité distale 35 du longeron 36.

La portion mobile 31 comporte également un élément profilé 37 aérodynamiquement et guidé en rotation autour du second axe de rotation R' de façon à pouvoir pivoter librement par rapport au longeron 36. Ce guidage en rotation de l'élément profilé 37 est obtenu au moyen de deux seconds paliers 38 formés par exemple par des roulements à billes, à aiguilles ou à rouleaux.

Par ailleurs, l'entraînement en rotation de la portion mobile selon le second axe de rotation R' peut être réalisé de différentes manières.

Selon un premier exemple tel que représenté aux figures 8 et 9, chaque portion mobile 41, 51 peut comporter respectivement un second actionneur électrique 49, 59 permettant de modifier l'orientation angulaire de chaque élément profilé 47, 57 par rapport respectivement au longeron 46, 56. Dans ce cas, le longeron 46, 56 est donc de forme tubulaire et permet de faire cheminer une connexion électrique entre l'extrémité proximale 43, 53 et l'extrémité distale 45, 55 du longeron 46, 56.

Comme précédemment, deux premiers paliers 44, 54 permettent respectivement de guider en rotation le longeron 46, 56 autour du premier axe de rotation R par rapport à la structure porteuse 2. De même deux seconds paliers 48, 58 permettent de guider respectivement en rotation l'élément profilé 47, 57 autour du second axe de rotation R' par rapport au longeron 46, 56.

Selon la figure 8, le second actionneur électrique 49 peut entraîner en rotation un pignon denté 80 coopérant avec une roue dentée intérieure 81 solidaire de l'élément profilé 47.

Selon une alternative telle que représentée à la figure 9, le second actionneur électrique 59 peut également entraîner en rotation un axe motorisé 83 coopérant avec une extrémité d'une biellette 82, l'autre extrémité de la biellette 82 coopérant avec l'élément profilé 57.

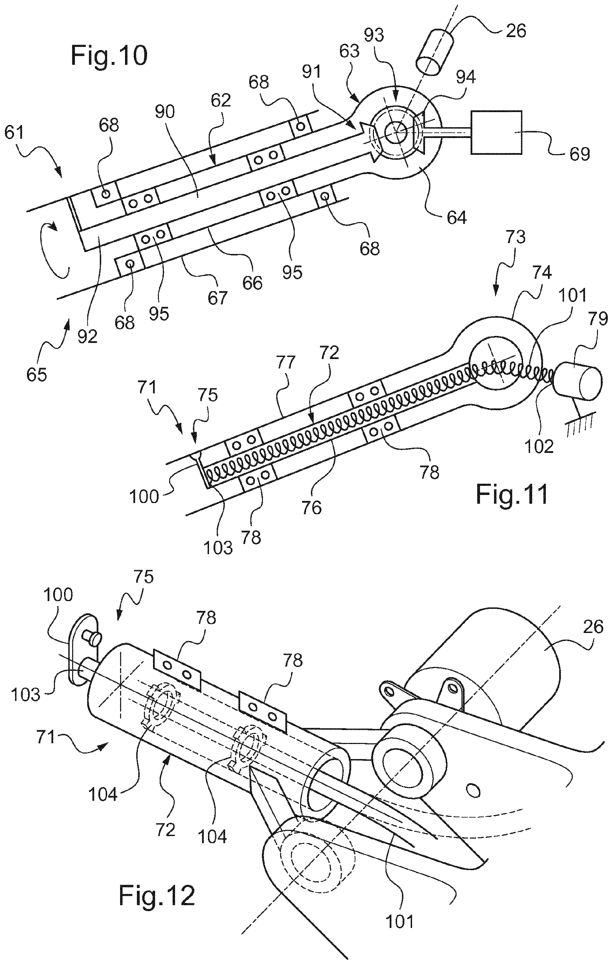

Par ailleurs selon un second exemple tel que représenté aux figures 10 à 12, les seconds actionneurs électriques 69, 79 peuvent également être respectivement agencés au niveau de la structure porteuse 2 à proximité de l'extrémité proximale 63, 73 respectivement de chaque longeron 66, 76.

Comme précédemment, deux premiers paliers 64, 74 permettent de guider respectivement en rotation le longeron 66, 76 autour du premier axe de rotation R par rapport à la structure porteuse 2. De même deux seconds paliers 68, 78 permettent de guider en rotation l'élément profilé 67, 77 autour du second axe de rotation R' par rapport respectivement au longeron 66, 76.

Cependant dans ce cas, la portion mobile 61, 71 n'est pas munie d'un second actionneur au niveau de l'extrémité distale 65, 75 d'un longeron 66, 76. Un tel longeron 66, 76 est cependant également de forme tubulaire et permet le passage soit d'un arbre de transmission 90, soit d'un organe de transmission flexible 101.

Ainsi selon une première réalisation de l'invention telle que représentée à la figure 10, des paliers 95 peuvent être logés à l'intérieur du longeron 66 et permettent de guider en rotation par rapport au longeron 66 un arbre de transmission 90 pour transmettre un mouvement de rotation à l'élément profilé 67.

Une première extrémité 91 de l'arbre de transmission 90 coopère avec une boite de transfert 93 munie de trois pignons coniques 94. Une seconde extrémité 92 de l'arbre de transmission 90 est quant à elle solidarisée avec l'élément profilé 67 et permet au second actionneur électrique 69 d'entrainer en rotation l'élément profilé 67 autour du second axe de rotation R'.

Selon une seconde réalisation de l'invention telle que représentée aux figures 11 et 12, des guides 104 peuvent également être logés à l'intérieur du longeron 76 et permettent de maintenir en position l'organe de transmission flexible 101 pour transmettre un mouvement de rotation à l'élément profilé 77. Un tel organe de transmission flexible 101 est par exemple formé par une gaine à l'intérieur de laquelle une lame est guidée par deux rangées de billes.

Une première extrémité 102 de la gaine est alors solidarisée avec le second actionneur électrique 79 et une seconde extrémité 103 de la gaine est prolongée d'une liaison 100 coopérant avec l'élément profilé 77 de la portion mobile 71.

Un tel organe de transmission flexible 101 permet alors de transmettre le mouvement de rotation du second actionneur électrique 79 à l'élément profilé 77 autour du second axe de rotation R', et ce quelle que soit la position angulaire du longeron 76 autour du premier axe de rotation R.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Drone (1) comportant une structure porteuse (2), au moins trois rotors (3-6) de sustentation et de propulsion et un système de commande (7) pour délivrer au moins une alimentation en énergie électrique d'au moins trois moteurs électriques (8) entraînant en rotation respectivement lesdits au moins trois rotors (3-6) suivant des axes de rotation agencés sensiblement verticalement et permettant de générer une poussée verticale, lesdits au moins trois rotors (3-6) étant espacés longitudinalement et transversalement les uns à côtés des autres,
ledit drone (1) comportant :
• une aile (9) comportant deux demi-ailes (10), symétriques par rapport à un plan de symétrie antéropostérieur P dudit drone (1), destinées au moins à augmenter la portance dudit drone (1), chacune desdites deux demi-ailes (10) comportant au moins une portion mobile (31, 41, 51, 61, 71) apte à se déplacer par rapport à ladite structure porteuse (2) dudit drone (1) selon d'une part un premier degré de liberté en rotation suivant un premier axe de rotation R parallèle à une direction longitudinale X dudit drone (1), chaque portion mobile (31, 41, 51, 61, 71) étant apte à se déplacer entre une position repliée (POS1) dans laquelle une extrémité libre (111, 121, 131) de chaque portion mobile (31, 41, 51, 61, 71) forme un train d'atterrissage dudit drone (1) et une position déployée (POS2) dans laquelle chaque portion mobile (31, 41, 51, 61, 71) augmente la portance dudit drone (1), ladite au moins une portion mobile (31, 41, 51, 61, 71) étant apte à se déplacer par rapport à ladite structure porteuse (2) dudit drone (1) selon d'autre part un second degré de liberté en rotation suivant un second axe de rotation R' sensiblement parallèle à une direction transversale Y dudit drone (1) lorsque ladite portion mobile (31, 41, 51, 61, 71) desdites deux demi-ailes (10) est agencée en position déployée (POS2),
• deux premiers actionneurs électriques (25, 26) permettant de déplacer respectivement chacun ladite portion mobile (31, 41, 51, 61, 71) de chacune desdites deux demi-ailes (10),
ledit système de commande (7) délivrant au moins une alimentation en énergie électrique desdits deux premiers actionneurs électriques (25, 26) pour réaliser chacun un déplacement de la portion mobile (31, 41, 51, 61, 71) desdites deux demi-ailes (10) entre ladite position repliée (POS1) et ladite position déployée (POS2) et/ou inversement entre ladite position déployée (POS2) et ladite position repliée (POS1),
**caractérisé en ce que** chacune desdites au moins une portion mobile (31, 41, 51, 61, 71) comporte :
• un longeron (36, 46, 56, 66, 76) présentant une extrémité proximale (33, 43, 53, 63, 73) au niveau de laquelle sont agencées au moins deux premiers paliers (34, 44, 54, 64, 74) pour former une liaison de type pivot suivant ledit premier axe de rotation R avec ladite structure porteuse (2) dudit drone (1) et une extrémité distale (35, 45, 55, 65, 75) opposée à ladite extrémité proximale (33, 43, 53, 63, 73),
• au moins un élément profilé (37, 47, 57, 67, 77) aérodynamiquement recouvrant ledit longeron (36, 46, 56, 66, 76),
• au moins deux seconds paliers (38, 48, 58, 68, 78) pour former une liaison de type pivot suivant ledit second axe de rotation R' entre ledit longeron (36, 46, 56, 66, 76) et ledit élément profilé (37, 47, 57, 67, 77) aérodynamiquement.

2. Drone selon la revendication 1,
**caractérisé en ce que** ledit longeron (36, 46, 56, 66, 76) est de forme tubulaire.

3. Drone selon la revendication 2,
**caractérisé en ce que** chacune desdites portions mobiles (41, 51) comporte un second actionneur électrique (49, 59) agencé au niveau de ladite extrémité distale (45, 55) du longeron (46, 56) pour piloter une orientation angulaire dudit élément profilé (47, 57) par rapport audit longeron (46, 56) suivant ledit second axe de rotation R' et **en ce que** ledit système de commande (7) est apte à délivrer une alimentation en énergie électrique de deux seconds actionneurs électriques (49, 59).

4. Drone selon la revendication 2,
**caractérisé en ce que** ladite structure porteuse (2) comporte deux seconds actionneurs électriques (69, 79), chaque second actionneur électrique (69, 79) étant agencé respectivement à proximité d'une extrémité proximale (63, 73) d'un longeron (66, 76) pour piloter l'orientation angulaire respective d'un élément profilé (67, 77) par rapport audit longeron (66, 76) correspondant suivant ledit second axe de rotation R' et **en ce que** ledit système de commande (7) est apte à délivrer une alimentation en énergie électrique desdits deux seconds actionneurs électriques (69, 79).

5. Drone selon la revendication 4,
**caractérisé en ce que** chacune desdites au moins une portion mobile (61) comporte :
• un arbre de transmission (90) guidé en rotation à l'intérieur dudit longeron (66), ledit arbre de transmission (90) comportant une première extrémité (91) entraînée en rotation par l'un desdits deux seconds actionneurs électriques (69) et une seconde extrémité (92) solidarisée avec ledit élément profilé (67) pour transmettre un mouvement de rotation dudit arbre de transmission (90) audit élément profilé (67),
• une boite de transfert (93) comportant trois pignons coniques (94) pour transmettre un mouvement de rotation généré par l'un desdits au moins deux seconds actionneurs électriques (69) audit arbre de transmission (90).

6. Drone selon la revendication 4,
**caractérisé en ce que** ledit drone (1) comporte au moins deux organes de transmission flexibles (101), chaque organe de transmission flexible (101) comportant une première extrémité (102) entraînée en rotation par l'un desdits au moins deux seconds actionneurs électriques (79) et une seconde extrémité (103) solidarisée avec l'un desdits éléments profilés (77) pour transmettre un mouvement de rotation dudit organe de transmission flexible (94) audit élément profilé (77).

7. Drone selon l'une quelconque des revendications 1 à 6, **caractérisé en ce que** chacune desdites extrémités libres (111, 131) desdites au moins une portion mobile (11, 31) comporte un système d'absorption (24) pour absorber au moins partiellement l'énergie cinétique dudit drone (1) lors de son atterrissage.

8. Drone selon l'une quelconque des revendications 1 à 7, **caractérisé en ce que** lesdits au moins trois rotors (3-6) sont formés au moins par un rotor avant gauche (3), un rotor avant droit (4), un rotor arrière gauche (5) et un rotor arrière droit (6) par rapport au sens d'avancement longitudinal dudit drone (1), ladite structure porteuse (2) comportant une forme allongée suivant ladite direction longitudinale X, un entraxe longitudinal L séparant les axes de rotation des rotors avant (3, 4) et les axes de rotation des rotors arrière (5, 6) étant supérieur à un entraxe transversal T séparant les axes de rotation des rotors gauches (3, 5) et droits (4, 6) et **en ce que** ladite aile (9) est implantée sur la structure porteuse (2) dans une zone médiane (16) de ladite structure porteuse (2) suivant ladite direction longitudinale X.

9. Drone selon la revendication 8,
**caractérisé en ce que** lesdits rotors (3-6) sont de même diamètre ød et **en ce que** ledit entraxe longitudinal L séparant les axes de rotation des rotors avant (3, 4) et les axes de rotation des rotors arrière (5, 6) est supérieur à la somme d'un diamètre ød desdits rotors (3-6) et d'une corde C de la demi-aile (10) mesurée à proximité d'une zone de liaison (15) de ladite demi-aile (10) avec ladite structure porteuse (2).

10. Drone selon l'une quelconque des revendications 1 à 9,
**caractérisé en ce que** chacune desdites au moins une portion mobile (21) comporte au moins un rotor de propulsion (22) entraîné en rotation par au moins un moteur électrique de propulsion (23) et **en ce que** ledit système de commande (7) est apte à délivrer une alimentation en énergie électrique dudit au moins un moteur électrique de propulsion (23).

## Patentansprüche

1. Drohne (1), umfassend eine Tragstruktur (2), mindestens drei Hub- und Flugantriebsrotoren (3-6) und ein Steuersystem (7) zur Zufuhr von mindestens einer Versorgung mit elektrischer Energie von mindestens drei Elektromotoren (8), die jeweils die mindestens drei Rotoren (3-6) entlang der Drehachsen in Drehung versetzten, die im Wesentlichen vertikal angeordnet sind und es ermöglichen, einen Auftrieb zu erzeugen, wobei die mindestens drei Rotoren (3-6) in Längsrichtung und quer nebeneinander beabstandet sind,
wobei die Drohne (1) aufweist:
• einen Flügel (9), der zwei Halbflügel (10) aufweist, die symmetrisch in Bezug auf eine anteroposteriore Symmetrieebene P der Drohne (1) sind, die dazu bestimmt sind, mindestens den Auftrieb der Drohne (1) zu erhöhen,
wobei jeder der zwei Halbflügel (10) mindestens einen beweglichen Abschnitt (31, 41, 51, 61, 71) aufweist, der geeignet ist, sich in Bezug auf die Tragstruktur (2) der Drohne (1) gemäß einerseits einem ersten Drehfreiheitsgrad entlang einer ersten Drehachse R, die parallel zu einer Längsrichtung X der Drohne (1) ist, zu bewegen, wobei jeder bewegliche Abschnitt (31, 41, 51, 61, 71) geeignet ist, sich zwischen einer eingefahrenen Position (POS1), in der ein freies Ende (111, 121, 131) von jedem beweglichen Abschnitt (31, 41, 51, 61, 71) ein Fahrwerk der Drohne (1) bildet, und einer ausgefahrenen Position (POS2) zu bewegen, in der jeder bewegliche Abschnitt (31, 41, 51, 61, 71) den Auftrieb der Drohne (1) erhöht, wobei der mindestens eine bewegliche Abschnitt (31, 41, 51, 61, 71) geeignet ist, sich in Bezug auf die Tragstruktur (2) der Drohne (1) gemäß andererseits einem zweiten Drehfreiheitsgrad entlang einer zweiten Drehachse R' zu bewegen, die im Wesentlichen parallel zu einer Querrichtung Y der Drohne (1) ist, wenn der bewegliche Abschnitt (31, 41, 51, 61, 71) der zwei Halbflügel (10) in der ausgefahrenen Position (POS2) angeordnet ist,
• zwei erste elektrische Stellglieder (25, 26), die ermöglichen, jeweils jeden beweglichen Abschnitt (31, 41, 51, 61, 71) von jedem der zwei Halbflügel (10) zu verschieben,
wobei das Steuersystem (7) mindestens eine Versorgung mit elektrischer Energie der zwei ersten elektrischen Stellglieder (25, 26) zuführt, um jeweils ein Verschieben des beweglichen Abschnitts (31, 41, 51, 61, 71) der zwei Halbflügel (10) zwischen der eingefahrenen Position (POS1) und der ausgefahrenen Position (POS2) und/oder umgekehrt zwischen der ausgefahrenen Position (POS2) und der eingefahrenen Position (POS1) durchzuführen,
**dadurch gekennzeichnet, dass** jeder des mindestens einen beweglichen Abschnitts (31, 41, 51, 61, 71) aufweist:
• einen Längsträger (36, 46, 56, 66, 76), der ein proximales Ende (33, 43, 53, 63, 73), an dem mindestens zwei erste Lager (34, 44, 54, 64, 74) ausgebildet sind, um eine Verbindung des Typs der Schwenkverbindung entlang der ersten Drehachse R mit der Tragstruktur (2) der Drohne (1) zu bilden, und ein distales Ende (35, 45, 55, 65, 75) aufweist, das dem proximalen Ende (33, 43, 53, 63, 73) gegenüberliegt,
• mindestens ein Profilelement (37, 47, 57, 67, 77), das den Längsträger (36, 46, 56, 66, 76) aerodynamisch bedeckt,
• mindestens zwei zweite Lager (38, 48, 58, 68, 78), um eine Verbindung des Typs der Schwenkverbindung entlang der zweiten Drehachse R' zwischen dem Längsträger (36, 46, 56, 66, 76) und dem Profilelement (37, 47, 57, 67, 77) aerodynamisch zu bilden.

2. Drohne nach Anspruch 1, **dadurch gekennzeichnet, dass** der Längsträger (36, 46, 56, 66, 76) röhrenförmig ist.

3. Drohne nach Anspruch 2, **dadurch gekennzeichnet, dass** jeder der beweglichen Abschnitte (41, 51) ein zweites elektrisches Stellglied (49, 59) aufweist, das an dem distalen Ende (45, 55) des Längsträgers (46, 56) ausgebildet ist, um eine Winkelausrichtung des Profilelements (47, 57) in Bezug auf den Längsträger (46, 56) entlang der zweiten Drehachse R' zu steuern, und dadurch, dass das Steuersystem (7) geeignet ist, eine Versorgung mit elektrischer Energie der zwei zweiten elektrischen Stellglieder (49, 59) zuzuführen.

4. Drohne nach Anspruch 2, **dadurch gekennzeichnet, dass** die Tragstruktur (2) zwei zweite elektrische Stellglieder (49, 59) aufweist, wobei jedes zweite elektrische Stellglieder (69, 79) jeweils in der Nähe eines proximalen Endes (63, 73) des Längsträgers (66, 76) ausgebildet ist, um die Winkelausrichtung jeweils eines Profilelements (67, 77) in Bezug auf den entsprechenden Längsträger (66, 76) entlang der zweiten Drehachse R' zu steuern, und dadurch, dass das Steuersystem (7) geeignet ist, eine Versorgung mit elektrischer Energie der zwei zweiten elektrischen Stellglieder (69, 79) zuzuführen.

5. Drohne nach Anspruch 4, **dadurch gekennzeichnet, dass** jeder des mindestens einen beweglichen Abschnitts (61) aufweist:
• eine Antriebswelle (90), die im Inneren des Längsträgers (66) drehbar geführt ist, wobei die Antriebswelle (90) ein erstes Ende (91) aufweist, das durch eines der zwei zweiten elektrischen Stellglieder (69) in Drehung versetzt wird, und ein zweites Ende (92) aufweist, das mit dem Profilelement (67) fest verbunden ist, um eine Drehbewegung von der Antriebswelle (90) auf das Profilelement (67) zu übertragen,
• ein Verteilergetriebe (93), das drei Kegelräder (94) aufweist, um eine Drehbewegung, die von einem der zwei zweiten elektrischen Stellglieder (69) erzeugt wird, auf die Antriebswelle (90) zu übertragen.

6. Drohne nach Anspruch 4, **dadurch gekennzeichnet, dass** die Drohne (1) mindestens zwei flexible Übertragungsorgane (101) aufweist, wobei jedes flexible Übertragungsorgan ein erstes Ende (102), das durch eines der zwei zweiten elektrischen Stellglieder (79) in Drehung versetzt wird, und ein zweites Ende (103) aufweist, das mit einem der Profilelemente (77) fest verbunden ist, um eine Drehbewegung von dem flexiblen Übertragungsorgan (94) auf das Profilelement (77) zu übertragen.

7. Drohne nach einem der Ansprüche 1 bis 6, **dadurch gekennzeichnet, dass** jedes der freien Enden (111, 131) des mindestens einen beweglichen Abschnitts (11, 31) ein Absorptionssystem (24) aufweist, um mindestens teilweise die kinetische Energie der Drohne (1) bei ihrem Landen zu absorbieren.

8. Drohne nach einem der Ansprüche 1 bis 7, **dadurch gekennzeichnet, dass** mindestens drei Rotoren (3-6) mindestens durch einen linken vorderen Rotor (3), einen rechten vorderen Rotor (4), einen linken hinteren Rotor (5) und einen rechten hinteren Rotor (6) in Bezug auf die Längsvorschubrichtung der Drohne (1) gebildet sind, wobei die Tragstruktur (2) eine in der Längsrichtung X gestreckte Form aufweist, wobei ein Achsenabstand L, der die Drehachsen der vorderen Rotoren (3, 4) und die Drehachsen der hinteren Rotoren (5, 6) trennt, größer als ein Achsenabstand T ist, der die Drehachsen der der linken (3, 5) und rechten Rotoren (4, 6) trennt, und dadurch, dass der Flügel (9) auf der Tragstruktur (2) in einem Mittelbereich (16) der Tragstruktur (2) in der Längsrichtung X angebracht ist.

9. Drohne nach Anspruch 8, **dadurch gekennzeichnet, dass** die Rotoren (3-6) den gleichen Durchmesser ød aufweisen und dadurch, dass der Achsenabstand L, der die Drehachsen der vorderen Rotoren (3, 4) und die Drehachsen der hinteren Rotoren (5, 6) trennt, größer als die Summe eines Durchmessers ød der Rotoren (3-6) und einer Flügeltiefe C des Halbflügels (10) ist, die in der Nähe von einem Verbindungsbereich (15) des Halbflügels (10) mit der Tragstruktur (10) gemessen ist.

10. Drohne nach einem der Ansprüche 1 bis 9, **dadurch gekennzeichnet, dass** jeder des mindestens einen beweglichen Abschnitts (21) mindestens einen Vortriebsrotor (22) aufweist, der durch mindestens einen elektrischen Antriebsmotor (23) in Drehung versetzt wird, und dadurch, dass das Steuersystem (7) geeignet ist, eine Versorgung mit elektrischer Energie des mindestens einen elektrischen Antriebsmotors (23) zuzuführen.

## Claims

1. Drone (1) comprising a supporting structure (2), at least three lift and propulsion rotors (3-6) and a control system (7) for providing at least one electrical energy supply of at least three electric motors (8) which rotate said at least three rotors (3-6), respectively, about rotational axes arranged substantially vertically and allow a vertical thrust to be generated, said at least three rotors (3-6) being longitudinally and transversely spaced from one another,
said drone (1) comprising:
• a wing (9) comprising two half-wings (10) which are symmetrical with respect to an anteroposterior symmetry plane P of said drone (1) and intended at least for increasing the lift of said drone (1), each of said two half-wings (10) comprising at least one movable portion (31, 41, 51, 61, 71) suitable for moving relative to said supporting structure (2) of said drone (1) according to a first degree of rotational freedom about a first rotational axis R which is parallel to a longitudinal direction X of said drone (1), each movable portion (31, 41, 51, 61, 71) being suitable for moving between a folded position (POS1) in which a free end (111, 121, 131) of each movable portion (31, 41, 51, 61, 71) forms a landing gear of said drone (1) and an unfolded position (POS2) in which each movable portion (31, 41, 51, 61, 71) increases the lift of said drone (1), said at least one movable portion (31, 41, 51, 61, 71) being suitable for moving relative to said supporting structure (2) of said drone (1), according to a second degree of rotational freedom about a second rotational axis R' which is substantially parallel to a transverse direction Y of said drone (1), when said movable portion (31, 41, 51, 61, 71) of said two half-wings (10) is in the unfolded position (POS2),
• two first electric actuators (25, 26) for moving each movable portion (31, 41, 51, 61, 71) of each of said two half-wings (10), respectively,
said control system (7) providing at least one electrical energy supply of said two first electric actuators (25, 26), such that each actuator moves the movable portion (31, 41, 51, 61, 71) of said two half-wings (10) between said folded position (POS1) and said unfolded position (POS2) and/or conversely between said unfolded position (POS2) and said folded position (POS1),
**characterised in that** each of said at least one movable portion (31, 41, 51, 61, 71) comprises:
• a spar (36, 46, 56, 66, 76) having a proximal end (33, 43, 53, 63, 73) at which at least two first bearings (34, 44, 54, 64, 74) for forming a pivot connection to said supporting structure (2) of said drone (1) about said first rotational axis R are arranged, and a distal end (35, 45, 55, 65, 75) which is opposite said proximal end (33, 43, 53, 63, 73),
• at least one profiled element (37, 47, 57, 67, 77) which aerodynamically covers said spar (36, 46, 56, 66, 76),
• at least two second bearings (38, 48, 58, 68, 78) for aerodynamically forming a pivot connection between said spar (36, 46, 56, 66, 76) and said profiled element (37, 47, 57, 67, 77) about said second rotational axis R'.

2. Drone according to claim 1, **characterised in that** said spar (36, 46, 56, 66, 76) is tubular.

3. Drone according to claim 2, **characterised in that** each movable portion (41, 51) comprises a second electric actuator (49, 59) arranged at said distal end (45, 55) of the spar (46, 56) for controlling an angular orientation of said profiled element (47, 57) with respect to said spar (46, 56) about said second rotational axis R', and **in that** said control system (7) is suitable for providing an electrical energy supply of two second electric actuators (49, 59).

4. Drone according to claim 2, **characterised in that** said supporting structure (2) comprises two second electric actuators (69, 79), each second electric actuator (69, 79) being arranged close to a proximal end (63, 73) of a spar (66, 76), respectively, for controlling the particular angular orientation of a profiled element (67, 77) with respect to said corresponding spar (66, 76) about said second rotational axis R', and **in that** said control system (7) is suitable for providing an electrical energy supply of said two second electric actuators (69, 79).

5. Drone according to claim 4, **characterised in that** each of said at least one movable portion (61) comprises:
• a transmission shaft (90) which is rotated within said spar (66), said transmission shaft (90) comprising a first end (91) that is rotated by means of one of said two second electric actuators (69) and a second end (92) that is rigidly connected to said profiled element (67) for transmitting a rotation of said transmission shaft (90) to said profiled element (67),
• a transfer case (93) comprising three bevel gears (94) for transmitting a rotation generated by one of said at least two second electric actuators (69) to said transmission shaft (90).

6. Drone according to claim 4, **characterised in that** said drone (1) comprises at least two flexible transmission members (101), each flexible transmission member (101) comprising a first end (102) that is rotated by means of one of said at least two second electric actuators (79) and a second end (103) that is rigidly connected to one of said profiled elements (77) for transmitting a rotation of said flexible transmission member (94) to said profiled element (77).

7. Drone according to any of claims 1 to 6, **characterised in that** each of said free ends (111, 131) of said at least one movable portion (11, 31) comprises an absorption system (24) for at least partially absorbing the kinetic energy of said drone (1) during the landing thereof.

8. Drone according to any of claims 1 to 7, **characterised in that** said at least three rotors (3-6) are formed at least by a front left-hand rotor (3), a front right-hand rotor (4), a rear left-hand rotor (5) and a rear right-hand rotor (6) with respect to the forward longitudinal direction of said drone (1), said supporting structure (2) having an elongate shape extending along said longitudinal direction X, a longitudinal centre-to-centre distance L between the rotational axes of the front rotors (3, 4) and the rotational axes of the rear rotors (5, 6) being greater than a transverse centre-to-centre distance T between the rotational axes of the left-hand rotors (3, 5) and the right-hand rotors (4, 6), and **in that** said wing (9) is located on the supporting structure (2) in a central region (16) of said supporting structure (2) along said longitudinal direction X.

9. Drone according to claim 8, **characterised in that** said rotors (3-6) have the same diameter ød, and **in that** said longitudinal centre-to-centre distance L between the rotational axes of the front rotors (3, 4) and the rotational axes of the rear rotors (5, 6) is greater than the sum of a diameter ød of said rotors (3-6) and a chord C of the half-wing (10) measured adjacently to a connection region (15) between said half-wing (10) and said supporting structure (2).

10. Drone according to any of claims 1 to 9, **characterised in that** each of said at least one movable portion (21) comprises at least one propulsion rotor (22) which is rotated by means of at least one electric propulsion motor (23), and **in that** said control system (7) is suitable for providing an electrical energy supply to said at least one electric propulsion motor (23).
